# EUROPEAN PATENT APPLICATION

(11) **EP 3 656 452 A1**
(43) Date of publication of application: **27.05.2020**
(21) Application number: 19208961.3
(22) Date of filing: 13.11.2019
(51) Int. Cl.: A63F 13/54, A63F 13/211, H04S 7/00, A63F 13/23, A63F 13/24

(54) **STEREOPHONIC SOUND LOCATING DEVICE CONNECTED TO HEADSET FOR TRACKING HEAD MOVEMENT**

(30) Priority: 23.11.2018 TW 107215997 U
(71) Applicant: Jian Ling Technology Co., Ltd., Taoyuan City 324 (TW)
(72) Inventor: LIU, Chen-Ya, Taoyuan City 324 (TW); LIU, Chin-Yuan, Taoyuan City 324 (TW)
(74) Representative: Cabinet Chaillot

(57) **Abstract**

A stereophonic sound locating device connected to headset for tracking head movement, comprising: a headset (10), a stereophonic sound locating device for tracking head movement (20) connected outside of the headset (10), and it can follow the movement of the head (U), whereby when the headset (10) moved with the head (U) movement, the axial sensor (26) receives an axial signal (261) tracking the head (U) movement, then the micro controller (25) transmits the axial signal (261) to the embedded audio chip (24), and the audio decoding and encoding chip (23) also transmits the audio signal (231) to the embedded audio chip (24), having the axial signal (261) and audio signal (231) communicate to each other allows the embedded audio chip (24) to produce stereophonic sound (O) in the right position according to the head (U) movement.

## Description

### BACKGROUND OF THE INVENTION

### 1. Field of the Invention:

The present invention relates to a stereophonic sound locating device connected to headset for tracking head movement, it is an independent and portable device, connected to the headset for tracking head movement to locate stereophonic sound in the right position accordingly.

### 2. Description of the Related Art:

Since the video game and video entertainment are popular nowadays, people are pursuing better audio experience, and the headset becomes a necessity for noise cancellation and avoiding bothering others. While playing a 3D virtual reality game, besides watching the screen, the player also needs to focus on the stereophonic sound to distinguish where does the sound come from.

However, when the payer's sight follows the moving object appeared in the screen, their head also follows the movement, so does the headset, thus an inconsistent problem between video and audio happened, the player will not be able to distinguish the right direction of the sound, therefore, the sound of the gunshot or the footsteps might confuse the player with the enemy position.

### SUMMARY OF THE INVENTION

A primary objective of the present invention is to provide a stereophonic sound locating device connected to headset for tracking head movement that integrates the audio decoding and encoding chip, the embedded audio chip, the micro controller, and the axial sensor on the substrate for solving the problems of locating stereophonic sound, and further achieve the effect of making the stereophonic sound stay in the original position while the head is moving.

Another objective of the present invention is to provide a stereophonic sound locating device connected to headset for tracking head movement that is portable, independent, and not built in the headset, it can connect with any type of headset that not having a tracking device, and further having benefits of the expandability, convenience, and reducing cost.

To achieve the objective mentioned above, the present invention comprises : a stereophonic sound locating device connected to headset for tracking head movement, comprising: a head set having at least an audio source cable; a stereophonic sound locating device for tracking head movement is connected outside of the headset, and it can follow the movement of the head, comprising: a case, the case having at least a control button, an audio and power input unit, and an audio output unit, and the audio output unit is electrically connected to the audio source cable; a substrate arranged inside the case, and the control button, the audio and power input unit, and the audio output unit are electrically connected to the substrate; an audio decoding and encoding chip arranged on the substrate and electrically connected to the audio and power input unit, the audio and power input unit transmits an original sound to the audio decoding and encoding chip, and the audio decoding and encoding chip turns original sound into an audio signal and provides power to the units on the substrate; an embedded audio chip arranged on the substrate and electrically connected to the audio decoding and encoding chip and the audio output unit, and the embedded audio chip turns the audio signal into a stereophonic sound; a micro controller arranged on the substrate and electrically connected to the control buttons and the embedded audio chip for integrating the audio decoding and encoding chip, the embedded audio chip, and the micro controller on the substrate, and the micro controller can be controlled by the control buttons; and an axial sensor arranged on the substrate and electrically connected to the micro controller; whereby when the headset moved with the head movement, the axial sensor receives an axial signal tracking the head movement, then the micro controller transmits the axial signal to the embedded audio chip, and the audio decoding and encoding chip also transmits the audio signal to the embedded audio chip, having the axial signal and audio signal communicate to each other allows the embedded audio chip to produce stereophonic sound in the right position according to the head movement.

Also, the joint of the audio and power input unit can be USB TYPE-A, Micro USB, or USB TYPE-C.

Also, the joint of the audio output unit can be 3.5mm audio jack or USB TYPE-C.

Also, between the headset and the stereophonic sound locating device for tracking head movement further comprising a combining unit.

Also, the combining unit can be a hook, a buckle, a headband, a clip, a magnet, an adhesive, or a Velcro for fixing the stereophonic sound locating device connected to headset for tracking head movement on the headset.

Also, the substrate can be a circuit board.

Also, the headset can be headband headphones, ear clip headphones or in-ear headphones,

With structures disclosed above, the present invention integrates the audio decoding and encoding chip, the embedded audio chip, the micro controller, and the axial sensor on the substrate for providing the sound with the right direction even the head and the headset is moving, whereby the stereophonic sound locating allows the player to distinguish the sound from different direction, also, the present invention is portable, independent, and not built in the headset, it can connect with any type of headset that not having a tracking device, and further having benefits of the expandability, convenience, and reducing cost.

### BRIEF DESCRIPTION OF THE DRAWINGS

FIG. 1A is an exploded perspective view of the present invention;
FIG. 1B is an assembly perspective view of the present invention;
FIG. 2A is another exploded perspective view of the present invention;
FIG. 2B is another assembly perspective view of the present invention;
FIG. 2C is another assembly perspective view in another angle of the present invention;
FIG. 3 is a block circuit diagram of the present invention;
FIG. 4 is a flow diagram of the present invention;
FIG. 5A is a schematic diagram of the present invention fixed on the user's head;
FIG. 5B is another schematic diagram of the present invention fixed on the user's head;
FIG. 6 is a schematic diagram of the present invention while the user's head is not moving;
FIG. 7 is a schematic diagram of the present invention while the user's head is moving;

### DETAILED DESCRIPTION OF THE PREFERRED EMBODIMENT

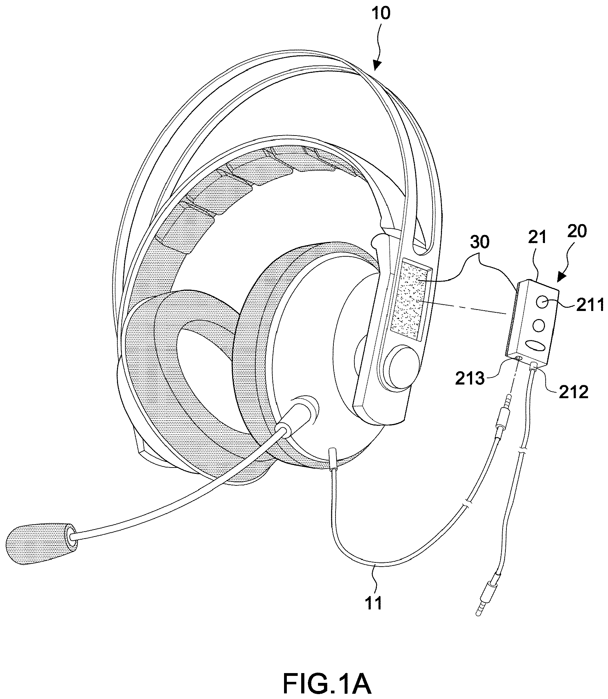

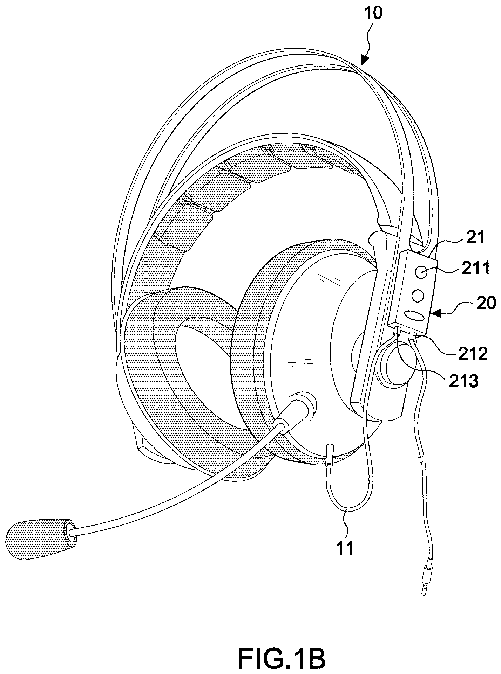

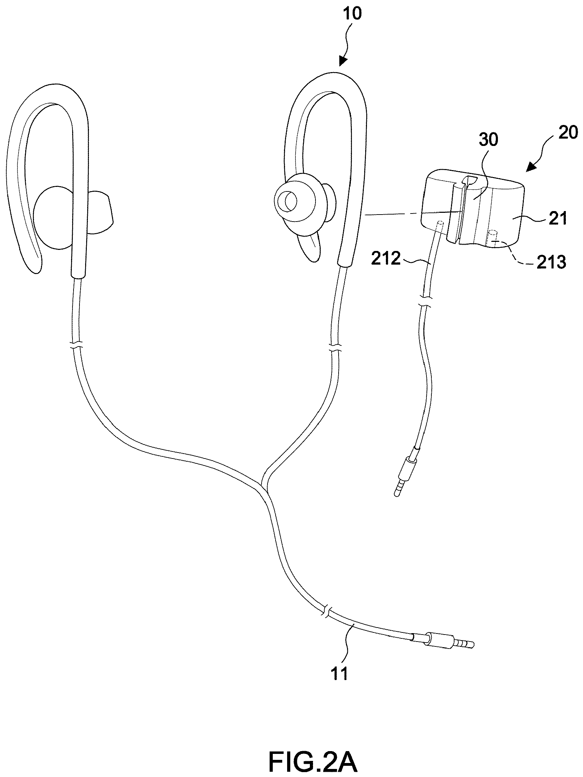

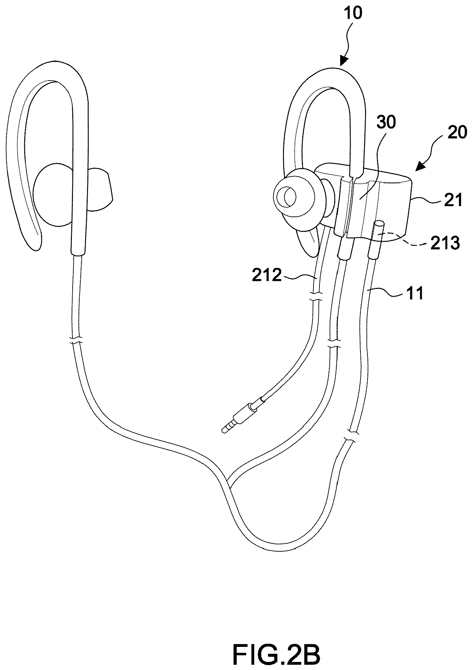

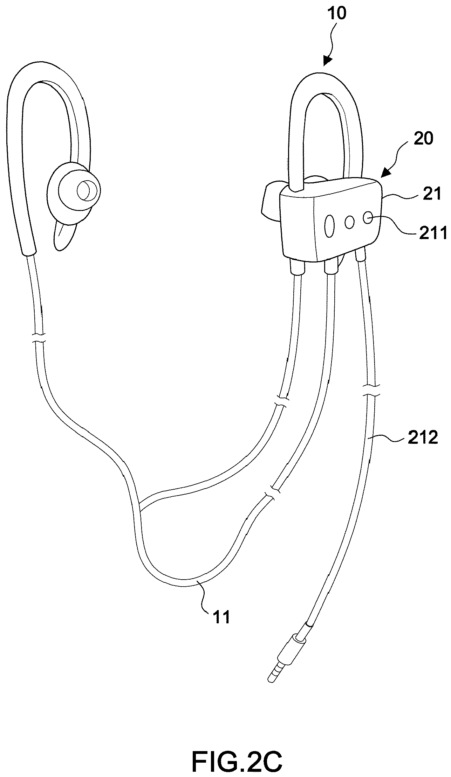

Referring to FIGS. 1-7, a preferred embodiment of the present invention mainly comprises a headset **10** having at least an audio source cable **11;** a stereophonic sound locating device for tracking head movement **20** is connected outside of the headset **10,** and it can follow the movement of the head **U,** in this embodiment, the headset **10** can be headband headphones, ear clip headphones or in-ear headphones, it also can be single ear headset, but the present invention is not limited to such application; the combining unit **30** can be a hook, a buckle, a headband, a clip, a magnet, an adhesive, or a Velcro for fixing the stereophonic sound locating device connected to headset for tracking head movement **20** on the headset **10,** but the present invention is not limited to such application, it can be fixed on the headset by any method and any position, it can also be a integrally formed with the headset **10** or the combining unit **30,** but not limited, as FIGS. 1A-1B showing, a headband headset **10** is combined with the stereophonic sound locating device connected to headset for tracking head movement **20,** as FIGS. 2A-2C showing, an ear clip headphones **10** is combined with the stereophonic sound locating device connected to headset for tracking head movement **20,** but not limited to such application.

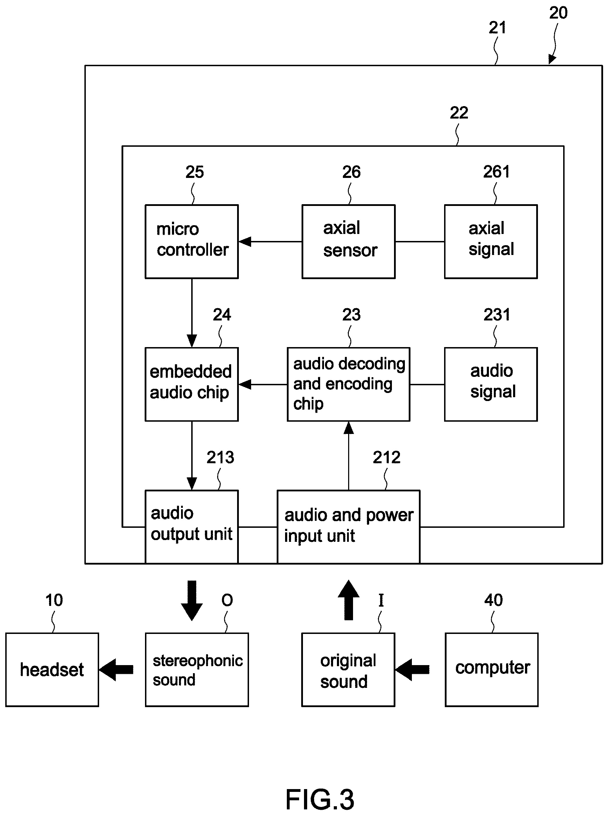

Referring to FIG. 3, the stereophonic sound locating device connected to headset for tracking head movement **20** comprising : a case **21,** the case **21** having at least a control button **211,** an audio and power input unit **212,** and an audio output unit **213,** and the audio output unit **213** is electrically connected to the audio source cable **11,** in this embodiment, the control button **211,** the audio and power input unit **212,** and the audio output unit **213** can be arranged on any position, the joint of the audio and power input unit **212** can be USB TYPE-A, Micro USB, or USB TYPE-C, and the joint of the audio output unit can be 3.5mm audio jack or USB TYPE-C, but the present invention is not limited to such application.

A substrate **22** arranged inside the case **21,** and the control button **211,** the audio and power input unit **212,** and the audio output unit **213** are electrically connected to the substrate **22,** in this embodiment, the substrate **22** is a circuit board, but the present invention is not limited to such application.

An audio decoding and encoding chip **23** arranged on the substrate **22** and electrically connected to the audio and power input unit **212,** the audio and power input unit **212** transmits an original sound **I** to the audio decoding and encoding chip **23,** and the audio decoding and encoding chip **23** turns the original sound **I** into an audio signal **231** and provides power to the units on the substrate **22,** in this embodiment, the original sound **I** is came from a computer **40** and the type of the audio decoding and encoding chip **23** is ALC4042, but the present invention is not limited to such application.

An embedded audio chip **24** arranged on the substrate **22** and electrically connected to the audio decoding and encoding chip **23** and the audio output unit **213,** and the embedded audio chip **24** turns the audio signal **231** into a stereophonic sound **O,** in this embodiment, the type of the embedded audio chip **24** is WNX7000, but the present invention is not limited to such application.

A micro controller **25** arranged on the substrate **22** and electrically connected to the control buttons **211** and the embedded audio chip **24** for integrating the audio decoding and encoding chip **23,** the embedded audio chip **24,** and the micro controller **25** on the substrate **22,** and the micro controller **25** can be controlled by the control buttons **211,** in this embodiment, the type of the micro controller **25** is CMH1000 and it has a motion algorithm, but the present invention is not limited to such application.

An axial sensor **26** arranged on the substrate **22** and electrically connected to the micro controller **25,** in this embodiment, the type axial sensor **26** is BOASH, but the present invention is not limited to such application.

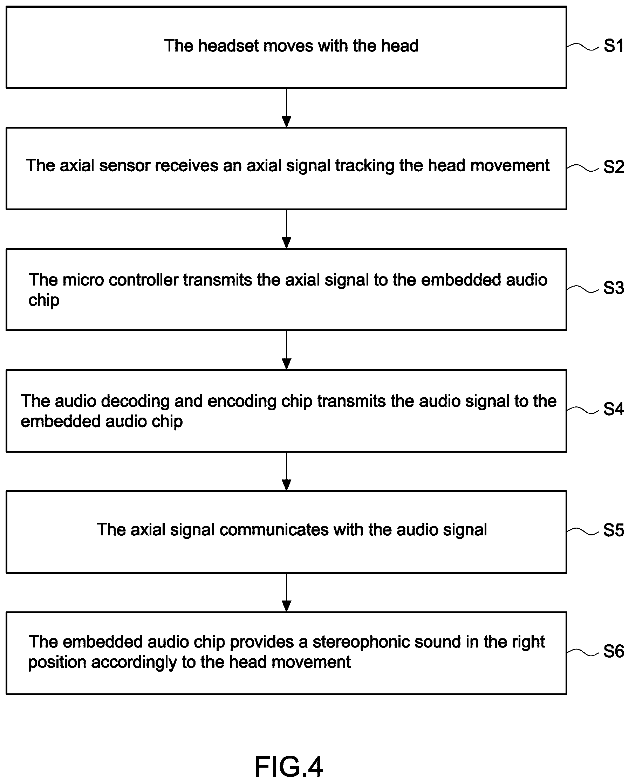

Referring to FIG. 4, when the headset moved with the head **U** movement, the axial sensor **26** receives an axial signal **261** following the head **U** movement, then the micro controller **25** transmits the axial signal **261** to the embedded audio chip **24,** and the audio decoding and encoding chip **23** also transmits the audio signal **231** to the embedded audio chip **24,** having the axial signal **261** and audio signal **231** communicate to each other allows the embedded audio chip **24** to produce stereophonic sound **O** in the right position according to the head **U** movement.

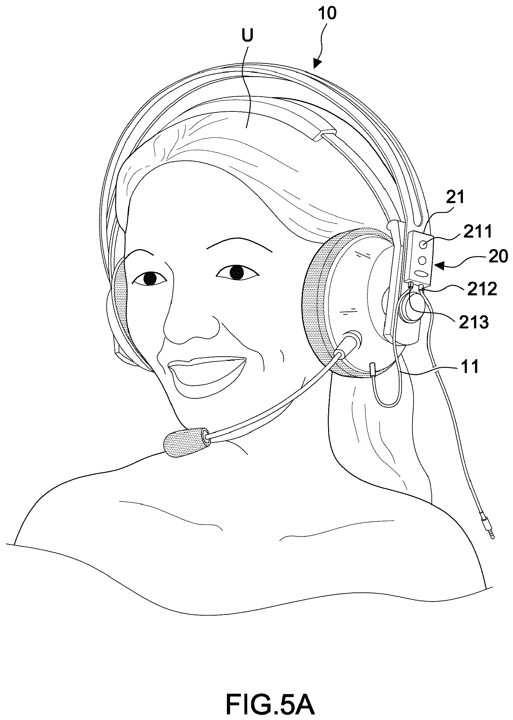

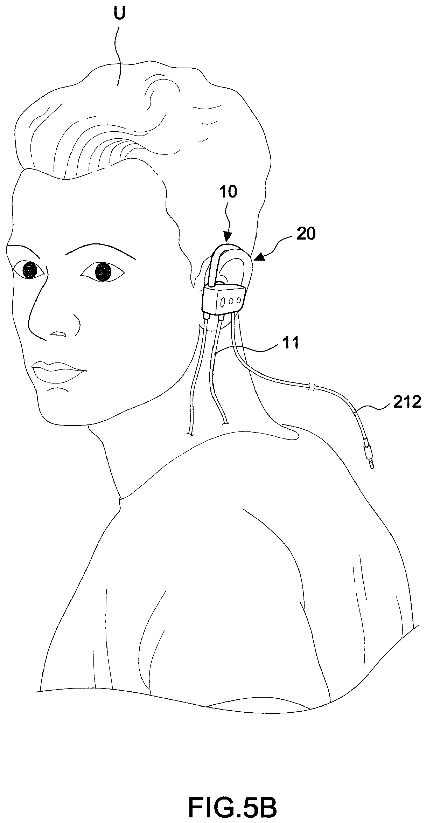

Referring to FIG. 5A, the headset **10** is a headband headset combined with the stereophonic sound locating device for tracking head movement **20** and fixed on the user's head **U;** Referring to FIG. 5B, the headset **10** is an ear-clip headset combined with the stereophonic sound locating device for tracking head movement **20** and fixed on the user's head **U,** but the present invention is not limited to such application.

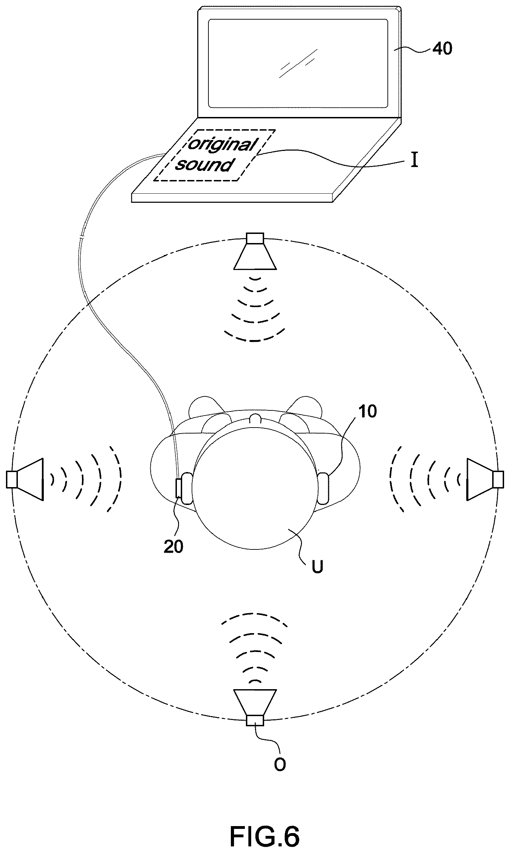

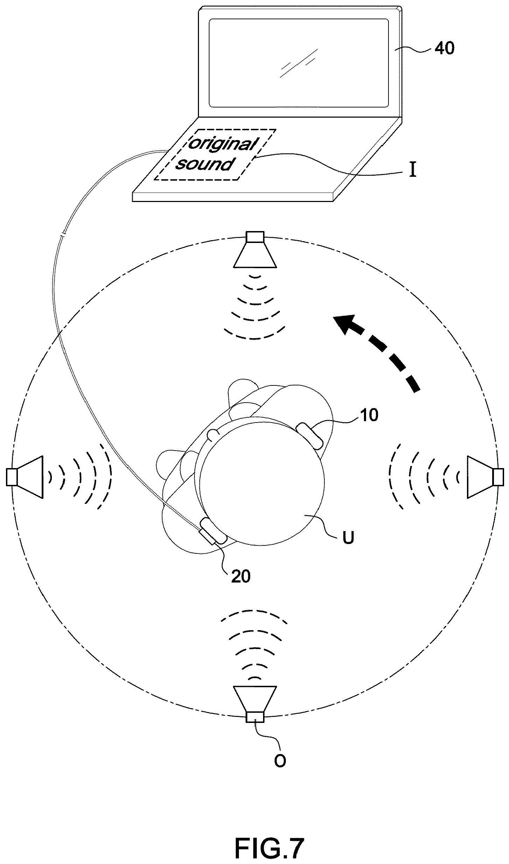

Base on the features disclosed above, the present invention integrates the audio decoding and encoding chip **23,** the embedded audio chip **24,** and the micro controller **25** on the substrate **22,** referring to FIG. 6 and FIG. 7, when the user's head is moving, the headset **10** follows the movement, but the stereophonic sound **O** stay in the original position, therefore, the user can distinguish the direction of the sound in 3D visual reality space, moreover, it is portable and independent, is not built in the headset **10,** therefore it can be connected to any kind of headset, and further achieve the effects of locating stereophonic sound, expandability, convenience, and reducing cost.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A stereophonic sound locating device connected to headset for tracking head movement, comprising:
a headset (10) having at least an audio source cable (11);
**characterized in that**
a stereophonic sound locating device for tracking head movement (20) is connected outside of the headset (10), and it can follow the movement of the head, comprising:
a case (21), the case (21) having at least a control button (211), an audio and power input unit (212), and an audio output unit (213), and the audio output unit (213) is electrically connected to the audio source cable (11);
a substrate (22) arranged inside the case (21), and the control button (211), the audio and power input unit (212), and the audio output unit (213) are electrically connected to the substrate (22);
an audio decoding and encoding chip (23) arranged on the substrate (22) and electrically connected to the audio and power input unit (212), the audio and power input unit (212) transmits an original sound (I) to the audio decoding and encoding chip (23), and the audio decoding and encoding chip (23) turns the original sound (I) into an audio signal (231) and provides power to the units on the substrate (22);
an embedded audio chip (24) arranged on the substrate (22) and electrically connected to the audio decoding and encoding chip (23) and the audio output unit (213), and the embedded audio chip (24) turns the audio signal (231) into a stereophonic sound (O);
a micro controller (25) arranged on the substrate (22) and electrically connected to the control buttons (211) and the embedded audio chip (24) for integrating the audio decoding and encoding chip (23), the embedded audio chip (24), and the micro controller (25) on the substrate (22), and the micro controller (25) can be controlled by the control buttons (211); and
an axial sensor (26) arranged on the substrate (22) and electrically connected to the micro controller (25); whereby when the headset (10) moved with the head (U) movement, the axial sensor (26) receives an axial signal (261) tracking the head (U) movement, then the micro controller (25) transmits the axial signal (261) to the embedded audio chip (24), and the audio decoding and encoding chip (23) also transmits the audio signal (231) to the embedded audio chip (24), having the axial signal (261) and the audio signal (231) communicate to each other allows the embedded audio chip (24) to produce a stereophonic sound (O) in the right position according to the head (U) movement.

2. The stereophonic sound locating device connected to headset for tracking head movement as claimed in claim 1, wherein the joint of the audio and power input unit (212) can be USB TYPE-A, Micro USB, or USB TYPE-C.

3. The stereophonic sound locating device connected to headset for tracking head movement as claimed in claim 1, wherein the joint of the audio output unit (213) can be 3.5mm audio jack or USB TYPE-C.

4. The stereophonic sound locating device connected to headset for tracking head movement as claimed in claim 1, wherein between the headset (10) and the stereophonic sound locating device for tracking head movement (20) further comprises a combining unit (30).

5. The stereophonic sound locating device connected to headset for tracking head movement as claimed in claim 4, wherein the combining unit (30) can be a hook, a buckle, a headband, a clip, a magnet, an adhesive, or a Velcro for fixing the stereophonic sound locating device connected to headset for tracking head movement on the headset (10).

6. The stereophonic sound locating device connected to headset for tracking head movement as claimed in claim 1, wherein the substrate (22) can be a circuit board.

7. The stereophonic sound locating device connected to headset for tracking head movement as claimed in claim 1, wherein the headset (10) can be headband headphones, ear clip headphones or in-ear headphones.
